# EUROPEAN PATENT SPECIFICATION

(11) **EP 0 342 049 B1**
(45) Date of publication and mention of the grant of the patent: **13.09.1995**
(21) Application number: 89304829.8
(22) Date of filing: 12.05.1989
(51) Int. Cl.: H04B 1/16, H04Q 7/32

(54) **Power supply control circuit for use in vehicle equipment**
Anordnung zur Speisesteuerung von Fahrzeuggeräten
Circuit de commande d'alimentation pour équipement de véhicule

(30) Priority: 13.05.1988 JP 116622/88
(43) Date of publication of application: 15.11.1989
(73) Proprietor: NEC CORPORATION, Tokyo (JP)
(72) Inventor: Murata, Yukio, Minato-ku Tokyo (JP)
(74) Representative: Orchard, Oliver John

(56) References cited:
- EP-A- 0 115 966
- US-A- 4 509 201
- PATENT ABSTRACTS OF JAPAN, vol. 11, no. 179 (E-514)[2626], 9th June 1987;& JP-A-62 11 365 (ALPINE ELECTRON) 20-01-1987

## Description

The present invention relates to a power supply control circuit and, more Particularly, to a power supply control circuit for use in vehicle equipment, such as an automobile radio telephone.

A conventional power supply control circuit for use in an automobile radio telephcne includes a power switch circuit which controls power supply to the telephone. To prevent an automobile battery from running out, the power switch circuit supplies power to the telephone in response not only to the depression of a power switch in the telephone but also to the turning-on of an ignition key, or switch. If the power supply is done in response only to the depression of the power switch, the automobile battery may run out.

In an emergency situation, however, the prior art power supply control circuit is not satisfactory. The user must operate at least two switches, i.e., the ignition switch and the power switch before dialing. Thus, he cannot quickly place a call in an emergency situation.

In Patent Abstracts of Japan, Vol. 11, No. 179 (E-514) (2626) which was published on June 9 1987, there is a summary of Japanese Patent Application No. 62-11365 which had been published on January 20 1987, and in which a circuit was proposed whereby, in an emergency, a driver could operate an emergency calling switch of an automobile telephone to initiate the operation of a controlling section which would enable a stored telephone number to be dialled automatically.

Features of an arrangement to be described in illustration of the present invention are a power supply control circuit which is capable of turning vehicle equipment on in an emergency situation regardless of the positions of an ignition key and a power switch, and which consumes a minimum of power in a waiting state.

In the arrangement to be described, there is provided a power supply control circuit for use in an automobile telephone to which power is supplied in response to a power switch signal and to an ignition voltage. The power switch signal is generated by a power switch in a handset of the telephone. The ignition voltage is produced by turning on an ignition key. The power supply control circuit comprises an emergency switch which manually produces an emergency switch signal. An emergency switch monitor circuit monitors the state of the emergency switch and produces an emergency control signal when it receives the emergency switch signal. Upon the emergency control signal, an ignition voltage control circuit produces the ignition voltage regardlees of the condition of the ignition key. Upon the emergency control signal, a power switch control circuit produces the power switch signal regardless of the condition of the power switch. By receiving the ignition voltage from the ignition voltage control circuit and the power switch signal from the power switch control circuit, the automobile telephone can quickly be turned on in an emergency situation.

The following description and accompanying drawings disclose a previously proposed arrangement together with, by way of an example, the invention which is characterised in the claims, whose terms determine the extent of the protection conferred hereby.

In the drawings:-
Fig. 1 is a block diagram showing a prior art mobile radio telephone including a power switch circuit;
Fig. 2 is a block diagram showing a mobile radio telephone including a power supply control circuit in accordance with the present invention;
Fig. 3 shows a schematic circuit diagram of the power supply control circuit of Fig. 2; and
Fig. 4 is a flow chart showing the operation of a depression detection circuit in Fig. 3.

### DETAILED DESCRIPTION OF THE PREFERRED EMBODIMENTS

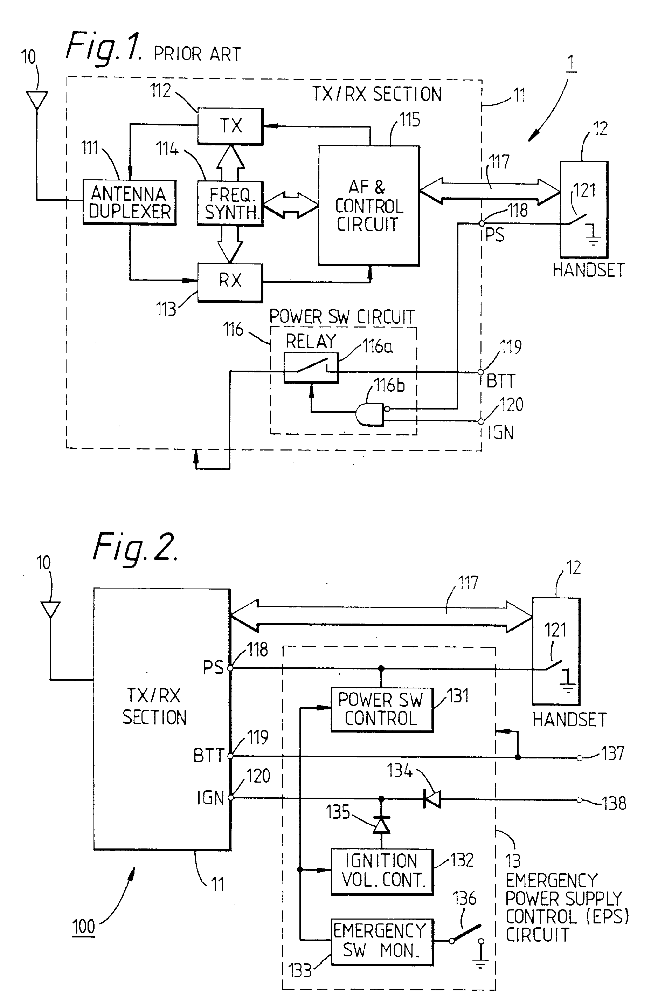

In Fig. 1, a mobile telephone 1 is mounted on a vehicle and includes an antenna 10, a transmitter/receiver (TX/RX) section 11 and a handset 12. TX/RX section 11 comprises an antenna duplexer 111, a transmitter 112, a receiver 113, a frequency synthesizer 114, and an audio frequency (AF) and control circuit 115. The transmitter 112 modulates a radio frequency signal with an AF signal from the AF and control circuit 115 and transmits a modulated radio frequency signal through the antenna duplexer 111 and the antenna 10. The receiver 113 receives a radio frequency signal through the antenna duplexer 111 and the antenna 10, demodulates the received radio frequency signal to produce an AF signal and supplies it to the AF and control circuit 115. The frequency synthesizer 114 tunes the transmitter 112 and the receiver 113 to one of plural radio channels under the control of the control circuit 115. The AF and control circuit 115 exchanges AF signals between the transmitter 112 and the receiver 113, and the handset 12. The control circuit 115 interchanges various control signals with a base station (not shown) to control the mobile telephone 1. A data bus 117 connects the AF and control circuit 115 and the handset 12. The operation of the mobile telephone per se is well known in the art and therefore no further description thereof will be given in this specification.

The TX/RX section 11 further comprises a power switch circuit 116 which includes a relay 116a and an AND gate 116b. The relay 116a is connected with a battery (BTT) terminal 119 which in turn is directly connected with a vehicle battery. When the relay 116a is closed, power from the battery is supplied to the TX/RX section 11 therethrough

An inverted input of AND gate 116b is connected with a power switch 121 through a power switch (PS) terminal 118. The other input of AND gate 116b is connected with an ignition key (not shown) through an ignition (IGN) terminal 120. If the ignition key is turned on, an ignition voltage of, for example, 12 volts is applied to IGN terminal 120. In this condition, if the power switch 121 is closed, AND gate 116b produces a high-level signal to cause the relay 116a to be closed. Otherwise, AND gate 116b produces a low-level signal to cause the relay 116a to be open.

In Fig. 2, the same elements as those in Fig. 1 are designated by the same reference numerals as those in Fig. 1. A mobile radio telephone 100 is mounted on a vehicle having a battery. The telephone 100 comprises an emergency power supply control (EPS) circuit 13 which includes a power switch control circuit 131, an ignition voltage control circuit 132, an emergency switch monitor circuit 133, diodes 134 and 135 and an emergency switch 136. The emergency switch 136 may be composed of a non-lock type push-button. The power switch control circuit 131 is connected with the PS terminal 118, the power switch 121 and the emergency switch monitor circuit 133. The ignition voltage control circuit 132 is connected with the anode of diode 135 and the emergency switch monitor circuit 133. The cathodes of diodes 134 and 135 are connected with each other and with the IGN terminal 120. The anode of diode 134 is connected with the ignition key through a terminal 138. The emergency switch 136 is connected between the emergency switch monitor circuit 133 and ground. Power is supplied to the EPS circuit 13 through a terminal 137 with which the vehicle battery and the BTT terminal 119 are connected.

In operation, if the emergency switch 136 is open, power supply to the TX/RX section 11 is to be done in the same manner as discussed in reference to Fig. 1. Only when the ignition key is turned on and the power switch 121 is closed, is power supplied from the battery to TX/RX section 11 through the BTT terminal 119 and the terminal 137.

When the emergency switch 136 is closed to produce an emergency switch signal, the emergency switch monitor switch 133 detects the emergency switch signal and thus produces an emergency control signal. The emergency control signal is applied to the ignition voltage control circuit 132 and to the power switch control circuit 131. Upon the control signal, the ignition voltage control circuit 132 supplies IGN terminal 120 through the diode 135 with the same voltage as the ignition voltage which is applied to the terminal 138 when the ignition key is turned on. In response to the emergency control signal, the power switch control circuit 131 makes PS terminal 118 be grounded as if the power switch 121 were closed. Thus, if the emergency switch 136 is closed, power is applied to TX/RX section 11 irrespective of the states of the power switch 121 and of the ignition key.

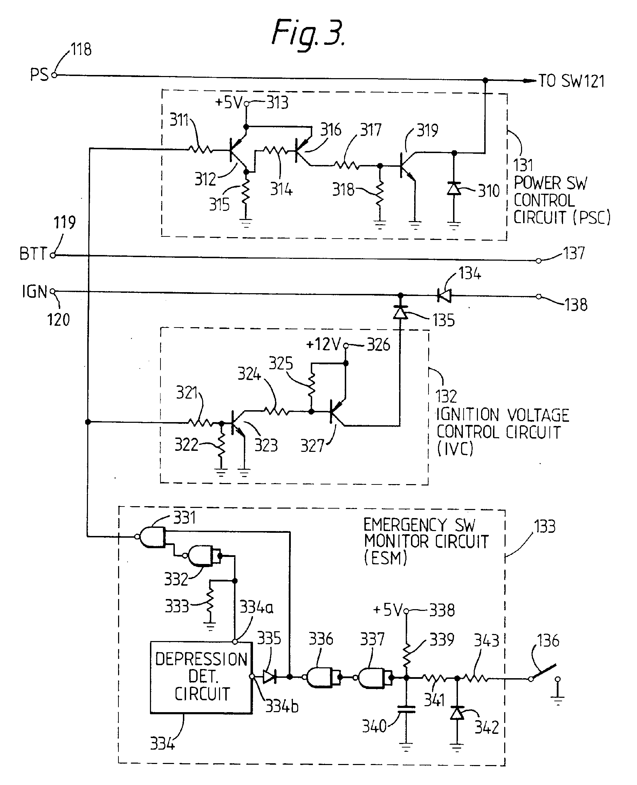

In Fig. 3, the same elements as those in Figs. 1 and 2 are designated by the same reference numerals as those in Figs. 1 and 2. The power switch control circuit 131 includes a PNP transistor 312 whose base, emitter and collector are connected with one end of a resistor 311, a terminal 313 and one end of a resistor 315, respectively. The other end of resistor 315 is grounded. The terminal 313 is coupled to five-volt voltage from the vehicle battery through a voltage stabilizer (not shown). The collector of transistor 312 is also connected with the base of a PNP transistor 316 through a resistor 314. The emitters of transistors 312 and 316 are connected with each other. The collector of transistor 316 is connected with the base of an NPN transistor 319. The base of transistor 319 is also connected with ground through a resistor 318. The emitter of transistor 319 is grounded and the collector of the same is connected with the cathode of a diode 310 and with the power switch 121. The anode of diode 310 is grounded.

The ignition voltage control circuit 132 includes an NPN transistor 323 whose base is connected with one end of a resistor 321 and grounded through a resistor 322. The emitter of transistor 323 is grounded and the collector of the same is connected with the base of a PNP transistor 327 through a resistor 324. The base and emitter of transistor 327 are connected with each other through a resistor 325. The emitter of transistor 327 is also connected with a terminal 326 to which a twelve-volt voltage is applied from the vehicle battery. The collector of transistor 327 is connected with the anode of diode 135.

In the emergency switch monitor circuit 133, one end of a resistor 343 is connected with the emergency switch 136. The other end of resistor 343 is connected with one end of a resistor 341 and with the cathode of a diode 342. The anode of diode 342 is grounded. The other end of resistor 341 is connected with one end of a reslstor 339, the inputs of an inverter 337 and one end of a capacitor 340. The other end of resistor 339 is connected with a terminal 338 to which a five-volt voltage is applied from the vehicle battery through the voltage stabilizer. The other end of capacitor 340 is grounded.

The output of inverter 337 is connected with the inputs of an inverter 336. The output of inverter 336 is connected with the cathode of a diode 335 and one input of a NAND gate 331. The anode of diode 335 is connected with a terminal 334b of a: depression detection circuit 334. The circuit 334 has another terminal 334a connected with the inputs of an inverter 332 and with one end of a resistor 333. The other end of resistor 333 is grounded. The output of inverter 332 is connected with the other input of NAND gate 331. The output of NAND gate 311 is connected with the resistors 331 and 321. The depression detection circuit 334 may be comprised of a microprocessor.

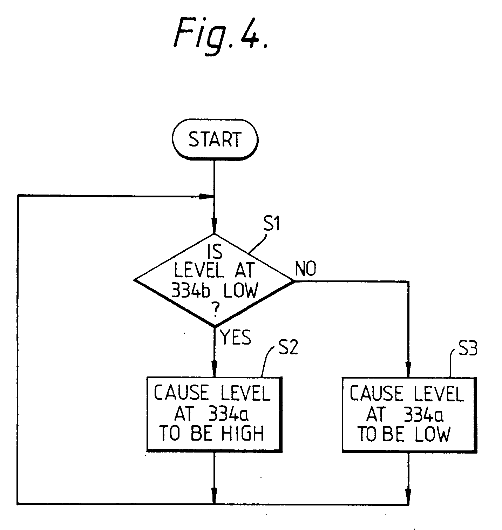

In operation, when the emergency switch 136 is open, a high-voltage signal is applied to the inverter 337 from the terminal 338. In response, the inverter 337 outputs a low-level signal and supplies it to the inverter 336 which in turn outputs a high-level signal. The high-level signal is applied to the terminal 334b through the diode 335. Upon the high-level signal, the circuit 334 produces a low-level signal at the terminal 334a (see Fig. 4).

Referring temporarily to Fig. 4, the circuit 334 (Fig. 3) checks at step S1 whether the level of signal at the terminal 334b is high or low. If high, the circuit 334 causes a level at the terminal 334a to be low at step S3. If low, the circuit 334 causes the level at the terminal 334a to be high at step S2. Steps S2 and S3 return to step S1.

Returning to Fig. 3, the low-level signal at the terminal 334a is applied to the inverter 332 which produces a high-level signal and supplies it to one input of NAND gate 331. The high-level signal from the inverter 336 is also applied to the other input of NAND gate 331. In response to the two high-level signals, NAND gate 331 produces a low-level signal and supplies it to the power switch control circuit 131 and to the ignition voltage control circuit 132. It is to be noted that the inverters 336 and 337 are used for impedance matching and the resistor 333 is used for stabilizing the output level of the circuit 334.

The low-level signal makes the transistor 312 nonconductive, which makes the transistor 316 conductive. This results in cutting off the transistor 319. The low-level signal also makes the transistor 323 nonconductive, which makes the transistor 327 nonconductive. Thus, when the emergency switch 136 is open, the power switch control circuit 131 and the ignition voltage control circuit 132 do not affect the condition of the PS terminal 118 and IGN terminal 120, respectively. Also, when the emergency switch 136 is open, less power will be consumed because all the transistors 316, 319, 323 and 327 are turned off.

When the emergency switch 136 is closed, an emergency switch signal; viz., the grounded signal is applied to the inverter 337 through an integrator made up of the resistors 341 and 343 and the capacitor 340, which integrator is inserted to depress the chattering caused by the depression of emergency switch 136. Upon the emergency switch signal, the inverter 337 produces a high-level signal to cause the inverter 336 to output a low-level signal. In response to the low-level signal, the circuit 334 supplies a high-level signal through the terminal 334a to the inverter 332 which in turn supplies a low-level signal to one of inputs of NAND agate 331. NAND gate 331 also receives the low-level signal on the other input thereof from the inverter 336 and thus outputs a high-level signal as the emergency control signal.

It should be noted that the diode 342 prevents a line between the switch 136 and the monitor circuit 133 from storing a negative charge thereon. This line is practically five centimeters in length.

Responsive to the emergency control signal of high-level from NAND gate 331, the transistor 312 turns off, which renders the transistor 316 conductive. As a result, the transistor 319 is turned on to ground the PS terminal 118 as it would be if power switch 121 is closed. It is to be noted that the diode 310 has the same function as the diode 342, i.e., preventing a line between the circuit 131 and the PS terminal 118 from storing a negative charge thereon.

Responsive to the high-level signal from NAND gate 331, the transistor 323 also turns on, which renders the transistor 327 conductive. As a result, a voltage of 12 volts is applied to the IGN terminal 120 through the diode 135 just as it would be had the ignition key been turned on. Thus, when the emergency switch 136 is closed, the PS terminal 118 is grounded and the ignition voltage (120) is applied to the IGN terminal 120, irrespective of the states of the power switch 121 and the ignition key. By simply depressing the emergency switch 136, therefore, the user can quickly turn the mobile telephone on to place a call in an emergency situation.

## Claims

1. A vehicle electrical apparatus including battery power supply connections (118) (119) (120) for causing power to be applied from a battery to the apparatus (100) in response to an ignition voltage and to a power switch signal, a power switch (121) for manually producing the power switch signal and supplying it to a power supply connection (118), an ignition key for producing the ignition voltage and supplying it to the power supply means (120), an emergency circuit (13) including: an emergency switch monitor circuit (133) for producing an emergency control signal, a power switch control circuit (131) connected with the power switch (121) and responsive to the emergency control signal for producing the power switch signal and supplying it to the power supply connection (118), and an ignition voltage control circuit (132) connected with the ignition key and responsive to the emergency control signal for producing the ignition voltage and supplying it to the power supply connection (120), wherein
(A) the emergency circuit (13) further includes an emergency switch (136) for manually producing an emergency switch signal,
(B) the emergency switch monitor circuit (133) has a first resistor (343), one end of which is connected with the emergency switch (136), a second resistor (341), one end of which is connected with the other end of said first resistor (341), a first diode (342) connected between the other end of the first resistor (343) and ground, a third resistor (339) connected between the other end of the second resistor (341) and a terminal (338) supplied with a predetermined voltage, a capacitor (340) connected between the other end of the second resistor (341) and ground, a first inverter (337) whose input is connected with the other end of the second resistor (341), a second inverter (336) whose input is connected with the output of said first inverter (337), a second diode (335), whose cathode is connected with the output of the second inverter (336), a depression detection circuit (334) having a first terminal (334b) and a second terminal (334a), the first terminal (334a) being connected with the anode of the second diode (335), and the depression detection circuit (334) producing a high-level signal when a signal at the first terminal (334b) is low, and producing a low-level signal when a signal at the first terminal (334b) is high, the high- and low-level signals being supplied to the second terminal (334a), a fourth resistor (333) connected between the second terminal (334a) and ground, a third inverter (332) whose input is connected with the second terminal (334a), and a NAND gate (331) whose two inputs are respectively connected with the outputs of the second and third inverters (332, 336) and whose output is connected with the output of the emergency switch monitor circuit (133) to output the emergency control signal,
(C) the power switch control circuit (131) has a fifth resistor (311), one end of which is connected with the output of the emergency switch monitor circuit (133), and a first transistor (312) whose base and emitter are connected with the other end of the fifth resistor (311) and with a terminal supplied with a predetermined voltage (313), respectively, a sixth resistor (315) connected between the collector of the first transistor (312) and ground, a seventh resistor (314), one end of which is connected with the collector of the first transistor (312), a second transistor (316) whose base and emitter are connected with the other end of the seventh resistor (314) and with the emitter of the first transistor (312), respectively, and an eighth resistor (317), one end of which is connected with the collector of the second transistor (316) and a ninth resistor (318) connected between the other end of the seventh resistor (317) and ground, and a third transistor (319) whose base, emitter and collector are connected with the other end of the seventh resistor (317), ground and the output of the power switch control circuit (131), respectively, and a third diode (310) whose anode and cathode are connected with ground and the collector of the third transistor (319), and
(D) the ignition voltage control circuit (132) includes a tenth resistor (321), one end of which is connected with the output of the emergency switch monitor circuit (133), and an eleventh resistor (322) connected between the other end of the tenth resistor (321) and ground, and a fourth transistor (323), whose base and emitter are connected with the other end of the tenth resistor (321) and ground respectively, and a twelfth resistor (324) one end of which is connected with the collector of the fourth transistor (323), and a fifth transistor (327) whose base, emitter and collector are connected with the other end of the twelfth resistor (324), the output of the ignition voltage control circuit (132) and a terminal supplied with a predetermined voltage (326), respectively, and a thirteenth resistor (325) connected between the base and emitter of the fifth transistor (327).

2. A vehicle electrical apparatus as claimed in claim 1, wherein each of the first and second transistors (312) (316) are PNP transistors and wherein the third transistor (319) is an NPN transistor.

3. A vehicle electrical apparatus as claimed in claim 1, wherein the first transistor (312) is an NPN transistor and wherein the second transistor (316) is a PNP transistor.

4. A vehicle electrical apparatus as claimed in claim 1, wherein the emergency switch (136) is a non-lock type push button.

## Patentansprüche

1. Elektrisches Fahrzeuggerät, mit Batteriespeiseverbindungen (118) (119) (120), die als Antwort auf eine Zündspannung und ein Leistungsschaltersignal eine Leistung von der Batterie dem Gerät (100) zuführt, einem Leistungsschalter (121) zum manuellen Erzeugen des Leistungsschaltersignals und zu dessen Zufuhr an eine Stromversorgungsverbindung (118), einem Zündschlüssel zum Erzeugen der Zündspannung und zu deren Zufuhr an die Stromversorgungseinrichtung (120), einer Notschaltung (13) mit einer Notschalterüberwachungsschaltung (133) zum Erzeugen eines Notsteuersignals, einer mit dem Leistungsschalter (121) verbundenen und auf das Notsteuersignal ansprechenden Leistungsschaltersteuerschaltung (131) zum Erzeugen des Leistungsschaltersignals und zu dessen Zufuhr an die Stromversorgungsverbindung (118) und einer mit dem Zündschlüssel verbundenen und auf das Notsteuersignal ansprechenden Zündspannungssteuerschaltung (132) zum Erzeugen der Zündspannung und zu deren Zufuhr an die Stromversorgungsverbindung (120) aufweist, wobei
(A) die Notschaltung (13) ferner einen Notschalter (136) zum manuellen Erzeugen eines Notschaltersignals aufweist,
(B) die Notschalterüberwachungsschaltung (133) einen ersten Widerstand (343), dessen eines Ende mit dem Notschalter (136) verbunden ist, einen zweiten Widerstand (341), dessen eines Ende mit dem anderen Ende des ersten Widerstands (343) verbunden ist, eine erste Diode (342), die zwischen das andere Ende des ersten Widerstands (343) und die Erde geschaltet ist, einen dritten Widerstand (339), der zwischen das andere Ende des zweiten Widerstands (341) und einem mit einer bestimmten Spannung gespeisten Anschluß (338) geschaltet ist, einen Kondensator (340), der zwischen das andere Ende des zweiten Widerstands (341) und die Erde geschaltet ist, einen ersten Inverter (337), dessen Eingang mit dem anderen Ende des zweiten Widerstands (341) verbunden ist, einen zweiten Inverter (336), dessen Eingang mit dem Ausgang des ersten Inverters (337) verbunden ist, eine zweite Diode (335), deren Kathode mit dem Ausgang des zweiten Inverters (336) verbunden ist, einen Druckdetektor (334) mit einem ersten Anschluß (334b) und einem zweiten Anschluß (334a), wobei der erste Anschluß (334a) mit der Anode der zweiten Diode (335) verbunden ist, und der Druckdetektor (334) ein Hochpegelsignal erzeugt, wenn ein Signal an dem ersten Anschluß (334b) niedrig ist, und ein Niederpegelsignal erzeugt, wenn ein Signal an dem ersten Anschluß (334b) hoch ist, und wobei die Hoch- und Niederpegelsignale dem zweiten Anschluß (334a) zugeführt werden, einen vierten Widerstand (333), der zwischen den zweiten Anschluß (334a) und die Erde geschaltet ist, einen dritten Inverter (332), dessen Eingang mit dem zweiten Anschluß (334a) verbunden ist, und eine NICHT-UND-Schaltung (331) besitzt, deren beide Eingänge mit den Ausgängen des zweiten bzw. dritten Inverters (332, 336) verbunden sind und deren Ausgang mit dem Ausgang der Notschalterüberwachungsschaltung (133) verbunden ist, um das Notsteuersignal auszugeben,
(C) die Leistungsschaltersteuerschaltung (131) einen fünften Widerstand (311), dessen eines Ende mit dem Ausgang der Notschalterüberwachungsschaltung (133) verbunden ist, und einen ersten Transistor (312), dessen Basis und Emitter mit dem anderen Ende des fünften Widerstands (311) bzw. einem mit einer bestimmten Spannung gespeisten Anschluß (313) verbunden sind, einen sechsten Widerstand (315), der zwischen den Kollektor des ersten Transistors (312) und die Erde geschaltet ist, einen siebten Widerstand (314), dessen eines Ende mit dem Kollektor des ersten Transistors (312) verbunden ist, einen zweiten Transistor (316), dessen Basis und Emitter mit dem anderen Ende des siebten Widerstands (314) bzw. mit dem Emitter des ersten Transistors (312) verbunden sind, und einen achten Widerstand (317), dessen eines Ende mit dem Kollektor des zweiten Transistors (316) verbunden ist, und einen neunten Widerstand (318), der zwischen das andere Ende des siebten Widerstands (317) und die Erde geschaltet ist, und einen dritten Transistor (319), dessen Basis, Emitter und Kollektor mit dem anderen Ende des siebten Widerstands (317), der Erde bzw. dem Ausgang der Leistungsschaltersteuerschaltung (131) verbunden sind, und eine dritte Diode (310) besitzt, deren Anode und Kathode mit der Erde bzw. dem Kollektor des dritten Transistors (319) verbunden sind, und
(D) die Zündspannungssteuerschaltung (132) einen zehnten Widerstand (321), dessen eines Ende mit dem Ausgang der Notschalterüberwachungsschaltung (133) verbunden ist, und einen elften Widerstand (322), der zwischen das andere Ende des zehnten Widerstands (321) und die Erde geschaltet ist, und einen vierten Transistor (323), dessen Basis und Emitter mit dem anderen Ende des zehnten Widerstands (321) bzw. der Erde verbunden sind, und einen zwölften Widerstand (324), dessen eines Ende mit dem Kollektor des vierten Transistors (323) verbunden ist, und einen fünften Transistor (327), dessen Basis, Emitter und Kollektor mit dem anderen Ende des zwölften Widerstands (324), dem Ausgang der Zündspannungssteuerschaltung (132) bzw. einem mit einer bestimmten Spannung gespeisten Anschluß (326) verbunden sind, und einen dreizehnten Widerstand (325) aufweist, der zwischen die Basis und den Emitter des fünften Transistors (327) geschaltet ist.

2. Elektrisches Fahrzeuggerät nach Anspruch 1, wobei jeder der ersten und zweiten Transistoren (312) (316) PNP-Transistoren sind, und wobei der dritte Transistor (319) ein NPN-Transistor ist.

3. Elektrisches Fahrzeuggerät nach Anspruch 1, wobei der erste Transistor (312) ein NPN-Transistor ist, und wobei der zweite Transistor (316) ein PNP-Transistor ist.

4. Elektrisches Fahrzeuggerät nach Anspruch 1, wobei der Notschalter (136) ein nichtverriegelbarer Tastschalter ist.

## Revendications

1. Dispositif électrique de véhicule comprenant des connexions d'alimentation par batterie (118) (119) (120) pour que de l'énergie soit appliquée par la batterie au dispositif (100) en réponse à une tension d'allumage et à un signal de commutateur d'alimentation, un commutateur d'alimentation (121) pour produire manuellement un signal de commutateur d'alimentation et le fournir à une connexion d'alimentation (118), une clef d'allumage pour produire la tension d'allumage et la fournir au moyen d'alimentation (120), un circuit d'urgence (13) comprenant un circuit de surveillance du commutateur d'urgence (133) afin de produire un signal de commande d'urgence, un circuit de commande de commutateur d'alimentation (131) relié au commutateur d'alimentation (121) et répondant à un signal de commande d'urgence pour produire le signal de commutateur d'alimentation et le fournir à la connexion d'alimentation (118), et un circuit de commande de tension d'allumage (132) relié à la clef d'allumage et répondant au signal de commande d'urgence pour produire la tension d'un allumage et la fournir à la connexion d'alimentation (120), dans lequel
(A) le circuit d'urgence (13) comporte en outre un commutateur d'urgence (136) pour produire manuellement un signal de commutateur d'urgence,
(B) le circuit de surveillance du commutateur d'urgence (133) comporte une première résistance (343), dont une extrémité est reliée au commutateur d'urgence (136), une seconde résistance (341), dont une extrémité est reliée à l'autre extrémité de ladite première résistance (341), une première diode (342) montée entre l'autre extrémité de la première résistance (343) et la masse, une troisième résistance (339) montée entré l'autre extrémité de la seconde résistance (341) et une borne (338) recevant une tension prédéterminée, un condensateur (340) monté entre l'autre extrémité de la seconde résistance (341) et la masse, un premier inverseur (337) dont l'entrée est connectée à l'autre extrémité de la seconde résistance (341), un second inverseur (336) dont l'entrée est connectée à la sortie du premier inverseur (337), une seconde diode (335), dont la cathode est reliée à la sortie du second inverseur (336), un circuit de détection de dépression (334) ayant une première borne (334b) et une seconde borne (334a), la première borne (334a) étant reliée à l'anode de la seconde diode (335), et le circuit de détection de dépression (334) produisant un signal de niveau haut lorsqu'un signal présent à la première borne (334b) est au niveau bas, et produisant un signal de niveau bas lorsqu'un signal présent à la première borne (334b) est au niveau haut, les signaux de niveau haut et bas étant fournis à la seconde borne (334a), une quatrième résistance (333) montée entre la seconde borne (334a) et la masse, un troisième inverseur (332) dont l'entrée est reliée à la seconde borne (334a), et une porte NON ET (331) dont deux entrées sont reliées respectivement aux sorties des second et troisième inverseurs (332, 336) et dont la sortie est reliée à la sortie du circuit de surveillance du commutateur d'urgence afin de sortir le signal de commande d'urgence,
(C) le circuit de commande du commutateur d'alimentation (131) comporte une cinquième résistance (311), dont une extrémité est reliée à la sortie du circuit de surveillance du commutateur d'urgence (333), et un premier transistor (312) dont la base et l'émetteur sont reliés à l'autre extrémité de la cinquième résistance (311) et à une borne recevant une tension prédéterminée (313), respectivement, une sixième résistance (315) montée entre le collecteur du premier transistor (312) et la masse, une septième résistance (314), dont une extrémité est reliée au collecteur du premier transistor (312), un second transistor (316) dont la base et l'émetteur sont reliés à l'autre extrémité de la septième résistance (314) et à l'émetteur du premier transistor (312), respectivement, et une huitième résistance (317), dont une extrémité est reliée au collecteur du second transistor (316) et une neuvième résistance (318) montée entre l'autre extrémité de la septième résistance (317) et la masse, et un troisième transistor (319) dont la base, l'émetteur et le collecteur sont reliés à l'autre extrémité de la septième résistance (317), à la masse et à la sortie du circuit de commande du commutateur d'alimentation (131) respectivement, et une troisième diode (310) dont l'anode et la cathode sont reliées à la masse et au collecteur du troisième transistor (319), et
(D) le circuit de commande de la tension d'allumage (132) comprend une dixième résistance (321), dont une extrémité est reliée à la sortie du circuit de surveillance du commutateur d'urgence (133), et une onzième résistance (322) montée entre l'autre extrémité de la dixième résistance (321) et la masse, un quatrième transistor (323), dont la base et l'émetteur sont reliés à l'autre extrémité de la dixième résistance (321) et la masse, respectivement, et une douzième résistance (324) dont une extrémité est reliée au collecteur du quatrième transistor (323), et un cinquième transistor (327) dont la base, l'émetteur et le collecteur sont reliés à l'autre extrémité de la douzième résistance (324), à la sortie du circuit de commande de la tension d'allumage (132) et à une borne recevant une tension prédéterminée (326), respectivement, et une treizième résistance (325) montée entre la base et l'émetteur du cinquième transistor (327).

2. Dispositif électrique de véhicule selon la revendication 1, dans lequel chacun des premier et second transistors ((312) (316) est un transistor PNP et dans lequel le troisième transistor (319) est un transistor NPN.

3. Dispositif électrique de véhicule selon la revendication 1, dans lequel le premier transistor (312) est un transistor NPN et dans lequel le second transistor (316) est un transistor PNP.

4. Dispositif électrique de véhicule selon la revendication 1, dans lequel le commutateur d'urgence (136) est un bouton-poussoir du type sans verrouillage.
